# EUROPÄISCHE PATENTSCHRIFT

(11) **EP 0 697 525 B1**
(45) Veröffentlichungstag und Bekanntmachung des Hinweises auf die Patenterteilung: **22.03.2000**
(21) Anmeldenummer: 95107177.8
(22) Anmeldetag: 11.05.1995
(51) Int. Cl.: F15B 11/02, B23Q 11/00, G05D 16/10

(54) **Spannmodul für Werkzeugmaschinen-Spannvorrichtung**
Clamping device for machine tools
Dispositif de serrage pour machines-outils

(30) Priorität: 17.08.1994 DE 9413273 U
(43) Veröffentlichungstag der Anmeldung: 21.02.1996
(73) Patentinhaber: HEILMEIER & WEINLEIN Fabrik für Oel-Hydraulik GmbH & Co. KG, D-81673 München (DE)
(72) Erfinder: Neumair, Georg, D-85356 Thalhausen (DE)
(74) Vertreter: Grünecker, Kinkeldey, Stockmair & Schwanhäusser Anwaltssozietät

(56) Entgegenhaltungen:
- DE-A- 3 204 055
- DE-A- 3 532 592
- DE-A- 4 226 495
- DE-A- 4 237 901
- DE-B- 2 310 193

## Beschreibung

Die Erfindung betrifft ein hydraulisches Spannmodul der im Oberbegriff des Patentanspruchs 1 angegeben Art.

Bei einem aus DE-A-4237901 bekannten Spannmodul dieser Art betätigt der Regelkolben den Schalter direkt oder über einen parallelen Stößel. Ausgehend von einem bestimmten Pumpendruckniveau ändert sich je nach Höhe des eingestellten Spanndrucks das Ansprechverhalten des Schalters. Denn der Hub des Regelkolbens aus der offenen Grundstellung hängt von der Druckdifferenz zwischen dem Pumpendruckniveau und dem eingestellten Spanndruck ab. Bei niedrigem Spanndruck wird der Regelkolben weiter gegen die Regelfeder verschoben als bei hohem Spanndruck. Sobald die Spannvorrichtung aus der Nicht-Spannstellung (in der sie mit dem Spanndruck gehalten wird) in die Spannstellung geht, fällt der Spanndruck auf den sogenannten Verfahrdruck ab. Auf den Verfahrdruck spricht beispielsweise der Regelkolben mit einer Bewegung in Richtung zur offenen Grundstellung an. Er muß bei dieser Bewegung den Schaltpunkt des Schalters erreichen. Der Schalter soll das Absinken auf den Verfahrdruck melden, damit die übergeordnete Steuervorrichtung der Werkzeugmaschine über den ordnungsgemäßen Spannvorgang informiert ist. Mit einer festen Einstellung des Schaltpunktes auf eine bestimmte Hubstellung des Regelkolbens läßt sich diese Forderung wegen der spanndruckabhängigen Verstellung des Regelkolbens vor allem bei niedrigem Spanndruck nicht zufriedenstellend erfüllen, denn diese Regelbewegung findet bei hoch eingestelltem Spanndruck in einem anderen Hubbereich des Regelkolbens statt als bei niedrigem Spanndruck, so daß bei niedrigem Spanndruck der Schaltpunkt nicht erreicht wird. Dazu kommt, daß die Spannvorrichtung stets mit Leckage arbeitet, die bei hohem Spanndruck höher ist als bei niedrigem Spanndruck, und über den Regelkolben ebenfalls das korrekte Ansprechen des Schalters bei niedrigem Spanndruck beeinträchtigen kann.

Ähnliche hydraulische Spannmodule sind aus DE-C2-3532592, DE-C2-3204055 und DE-C-2310193 bekannt, wobei grundsätzlich in einem Spannmodul das Wegeventil entweder mit dem Druckminderventil baulich kombiniert oder von diesem getrennt angeordnet ist.

In einem in DE 42 26 495 A1 gezeigten Druckregelventil enthält ein hohler Regelkolben einen Stößel, der druckabhängig relativ zum Regelkolben axial verstellbar ist, um die Durchströmung des Regelkolbens zu variieren.

Der Erfindung liegt die Aufgabe zugrunde, ein hydraulisches Spannmodul der eingangs genannten Art zu schaffen, bei dem innerhalb des Einstellbereichs des Druckminderventils ein korrektes Ansprechen des Schalters auf für eine übergeordnete Steuervorrichtung der Werkzeugmaschine wichtige Druckänderungen gewährleistet ist. Gemäß einem Nebenaspekt soll das zu schaffende Spannmodul die Verwendung sehr präziser Schalter mit kurzem Nachlaufweg dem Schaltpunkt ermöglichen.

Die gestellte Aufgabe wird mit den im Patentanspruch 1 enthaltenen Merkmalen gelöst.

Die verwendeten elektromechanischen Schalter sind sogenannte Mikroschalter, die wegen eines kurzen Nachlaufwegs ab dem Schaltpunkt eine wünschenswert kleine Schalthysterese haben und sehr präzise arbeiten. Durch eine während der Hubbewegung des Regelkolbens in Richtung zur offenen Grundstellung vorgenommene Verstellung des Betätigungskolbens wird der Schaltpunkt des Schalters relativ zum Regelkolben verschoben, so daß der Schaltpunkt des bei hoch eingestelltem Spanndruck, z.B., näher bei der offenen Grundstellung des Regelkolbens liegt (früher Schaltpunkt), als bei niedrig eingestelltem Spanndruck (später Schaltpunkt). Der Schaltpunkt liegt dann jeweils innerhalb des Hubbereiches des Regelkolbens, in dem dieser bei dem eingestellten Spanndruckarbeitet. Der Schalter spricht zuverlässig auf den Druckabfall zum Verfahrdruck bzw. die dadurch auftretende Regelbewegung des Regelkolbens an. Es wird sozusagen durch den relativ zum Regelkolben verstellbaren Betätigungskolben jeweils ein Hubausschnitt innerhalb des Regelkolbenhubes ausgewählt, der nur so groß zu sein braucht, daß der Schalter seinen Schaltpunkt gerade erreicht. Dieser Hubausschnitt läßt sich innerhalb des Regelkolbenhubs dort hin verschieben, wo relativ zum stationären Schalter der Regelkolben gerade seine, z.B., den Verfahrdruck repräsentierende, bei niedrigem Spanndruck gegebenenfalls nur kleine, Regelbewegung ausführt. Das sichere Ansprechen des Schalters wird weder durch eine Änderung des Spanndrucks noch durch die Leckage der Spannvorrichtung gefährdet. Mit dieser Ausbildung kann, da der Schaltpunkt mittels des Betätigungskolbens beliebig über den Regelkolben verschiebbar ist, ein Mikroschalter mit extrem kurzem Nachlaufweg ab seinem Schaltpunkt verwendet werden. Denn der Betätigungskolben entkoppelt den Regelkolben vom Schalter, sobald der Schaltpunkt erreicht worden ist. Welchen Resthub dann der Regelkolben noch ausführt, ist für den Schalter ohne Bedeutung, da der Schalter innerhalb des ausgewählten Hubausschnitts des Regelkolbenhubs betätigt wird.

Baulich einfach und funktionssicher ist die Ausführungsform gemäß Anspruch 2. Die Feder führt den Betätigungskolben wieder in die ausgefahrene Stellung zurück. Die Kraft der Feder ist so groß, daß zumindest der Gleitwiderstand des Betätigungskolbens und der Widerstand einer gegebenenfalls vorgesehenen Dichtung zwischen dem Regelkolben und dem Schalter überwunden werden.

Besonders zweckmäßig ist die Ausführungsform gemäß Anspruch 3, bei der der Betätigungskolben hydraulisch und in Abhängigkeit von der Höhe des Steuerdrucks verstellt wird, um den Schaltpunkt zu verstellen. Die Verstellung des Schaltpunktes erfolgt stufenlos oder in zumindest zwei Stufen. Die exakte Verstellung des Betätigungskolbens wird durch eine Abstimmung zwischen der Beaufschlagungsfläche des Betätigungskolbens, der Kraft oder Kennlinie der Feder, dem Bewegungswiderstand des Betätigungskolbens und der Druckdifferenz zwischen dem Steuerdruck und dem Rücklaufdruck erreicht.

Die Ausführungsform gemäß Anspruch 4 ist vorteilhaft für einen Mikroschalter mit kurzem Nachlaufweg ab dem Schaltpunkt. Der Betätigungskolben wird auch mechanisch verstellt, um den Schalter gegenüber dem Regelkolben zu entkoppeln, damit dieser ungestört bis in seine offene Grundstellung verfahren kann, ohne den Schalter unzulässig zu belasten. Die Kraft der den Betätigungskolben wieder rückstellenden Feder hat auf die Regelfunktion des Regelkolbens keinen Einfluß. Die mechanische Verstellung des Betätigungskolbens im Hinblick auf den kurzen Nachlaufweg des Mikroschalters erfolgt bei dieser Ausführungsform zusätzlich zur hydraulischen Verstellung des Betätigungskolbens zum Verschieben des Schaltpunktes innerhalb des Regelkolbenhubs.

Bei der alternativen Ausführungsform gemäß Anspruch 5 wird der Betätigungskolben nur mechanisch verstellt, um dem kurzen Nachlaufweg des Schalters ab seinem Schaltpunkt Rechnung zu tragen. Derartige Schalter arbeiten nämlich sehr präzis und mindern das eingangs geschilderte Problem zumindest teilweise aufgrund ihrer hohen Schaltpräzision bzw. kleinen Schalthysterese. Die Verstellung des Betätigungskolbens nach Erreichen des Schaltpunktes wird von der Regelfeder des Regelkolbens bewirkt, wobei die Regelfunktion des Regelkolbens dadurch nicht beeinträchtigt ist. Der Schalter ist über den Betätigungskolben vom Regelkolben und dessen direkter Betätigungskraft entkoppelt und wird auch nicht durch die Kraft der den Betätigungskolben belastenden Feder beaufschlagt, weil diese Kraft vom Gegenanschlag aufgenommen wird. Der Schalter arbeitet unter idealen Bedingungen und deshalb mit langer Standzeit.

Besonders vorteilhaft ist die Ausführungsform von Anspruch 6.

Der Betätigungskolben ist zwischen der eingefahrenen und der ausgefahrenen Stellung auch noch in wenigstens einer Zwischenstellung haltbar, in der er den Betätiger des Druckschalters bewegt, damit der Druckschalter das Signal "Spanndruck vorhanden bzw. Verfahrdruck erreicht" meldet. Die Zwischenstellung ist für einen niedrigen Spanndruck bzw. Steuerdruck-Bereich vorgesehen, innerhalb dessen es nur mit einer eingefahrenen und einer ausgefahrenen Stellung des Betätigungskolbens schwierig sein kann, ordnungsgemäße Meldungen für die übergeordneten Steuervorrichtung zu erzeugen. Der Schaltpunkt wird auf diese Weise nicht nur zwischen "früh" und "spät" verstellt, sondern auch noch in die Zwischenstellung.

Gemäß Anspruch 7 ist der Zwischenanschlag in Richtung zur eingefahrenen Stellung des Betätigungskolbens nachgiebig, so daß der Betätigungskolben dann in die eingefahrene Stellung verstellt werden kann, wenn der Spanndruck bzw. der Steuerdruck entsprechend angestiegen ist. Der Schaltpunkt könnte auch mit mehr Schritten verlagert werden als nur mit drei.

Baulich einfach ist die Ausführungsform gemäß Anspruch 8. Die zweite Feder ist in ihrer Federstärke auf den Steuerdruckwert eingestellt, bei dem der Betätigungskolben die Zwischenstellung einnehmen soll. Die Kraft der zweiten Feder ist kleiner als die mit dem Steuerdruck am Betätigungskolben erzeugte Kraft bei einem Wert des Steuerdrucks, bei dem der Betätigungskolben die eingefahrene Stellung einnehmen muß.

Bei der Ausführungsform gemäß Anspruch 9 beeinträchtigen die ersten und zweiten Federn einander in ihrer Wirkung nicht.

Bei der Ausführungsform gemäß Anspruch 10 übernimmt der Gegenanschlag eine weitere Funktion, indem er die offene Grundstellung des Regelkolbens definiert.

Bei der Ausführungsform gemäß Anspruch 11 wird der Schalter schonend behandelt, weil sein Betätiger nach Erreichen des Schaltpunktes keiner Kraft mehr unterworfen wird.

Bei der Ausführungsform gemäß Anspruch 12 ist sichergestellt, daß der Schalter innerhalb des Spanndruckbereiches den anzuzeigenden Druckabfall zuverlässig meldet.

Für die Praxis empfiehlt sich die Ausführungsform gemäß Anspruch 13 oder 14.

Ausführungsformen des Erfindungsgegenstandes werden nachfolgend anhand der Zeichnungen erläutert. Es zeigen:
- Fig. 1: ein schematisches Blockschaltbild eines hydraulischen Spannmoduls einer Spannvorrichtung einer Werkzeugmaschine,
- Fig. 2A,2B: einen Längsschnitt eines Spannmoduls, wobei Fig. 2A eine Betriebsstellung und Fig. 2B eine andere Betriebsstellung verdeutlichen,
- Fig. 3A,3B: einen Teillängsschnitt einer weiteren Ausführungsform in zwei unterschiedlichen Betriebsstellungen und
- Fig. 4A,4B: einen Teillängsschnitt einer weiteren Ausführungsform in zwei unterschiedlichen Betriebsstellungen, und
- Fig. 5: einen Teillängsschnitt einer weiteren Ausführungsform in einer Regelstellung bei niedrigem Verbraucherdruck.

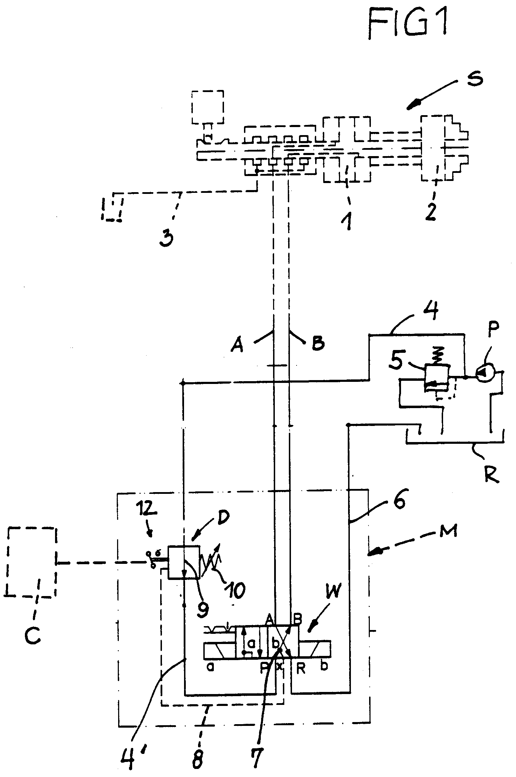

In Fig. 1 ist eine Spannvorrichtung S strichliert angedeutet, wie sie beispielsweise in einer Drehmaschine verwendet wird und ggfs. mit einer spannbaren Reitstockpinole (nicht gezeigt) zusammenarbeitet. Die Spannvorrichtung enthält einen Spannkolben 1 für ein Spannfutter 2. Der Spannkolben ist zu einer hin- und hergehenden Bewegung über Arbeitsleitungen A,B hydraulisch antreibbar und arbeitet mit einer Leckage, die über eine Leckageleitung 3 abgeführt wird. Mit der Spannvorrichtung wird jeweils ein Werkstück bei der Bearbeitung gehalten.

Zum Ansteuern der Spannvorrichtung S ist ein Spannmodul M (strichpunktiert angedeutet) vorgesehen, das aus einer Pumpe P über eine Pumpenleitung 4 mit Druckmittel versorgt wird. Der Druck in der Pumpenleitung 4 wird auf einem vorbestimmten Pumpendruckniveau, z.B. 45 bar, durch ein System-Druckbegrenzungsventil 5 gehalten, das einen Beipaß zum Rücklauf R überwacht. Die Arbeitsleitungen A,B sind an ein Wegesteuerventil W angeschlossen, das seinerseits an eine Rücklaufleitung 6 und an eine Leitung 4 für geminderten Druck angeschlossen ist. Zwischen der Pumpenleitung 4 und der Leitung 4' ist ein Druckminderventil D vorgesehen, an dem der Spanndruck der Spannvorrichtung S mittels einer Regelfeder 10 einstellbar ist, z.B. zwischen 5 bar und 40 bar, und das den eingestellten Spanndruck (geminderten Druck) für das Wegesteuerventil W unabhängig von eventuellen Änderungen des Pumpendruckniveaus in der Pumpenleitung 4 konstant hält. Im Druckminderventil D ist ein Regelkolben 9 von der Regelfeder 10 beaufschlagt, der gegen die Regelfeder 10 vom Steuerdruck aus einer Steuerleitung 8 beaufschlagt wird. Die Steuerleitung 8 zweigt bei dieser Ausführungsform von einer Abzapfung 7 im Wegesteuerventil W ab, an der der jeweils in der Arbeitsleitung A oder B herrschende Spanndruck abgegriffen und dem Regelkolben 9 aufgegeben wird. Der Steuerdruck könnte auch ausgangs des Druckminderventils D oder zwischen dem Wegesteuerventil W und der Spannvorrichtung S abgegriffen werden.

Am Druckminderventil D ist ein elektromechanischer Schalter 12, z.B. ein Mikroschalter vorgesehen, der dazu dient, das Erreichen des Spanndrucks bzw. einen vorbestimmten Abfall des Spanndrucks zu überwachen und entsprechende Meldungen an eine übergeordnete Steuervorrichtung C der Werkzeugmaschine zu übermitteln.

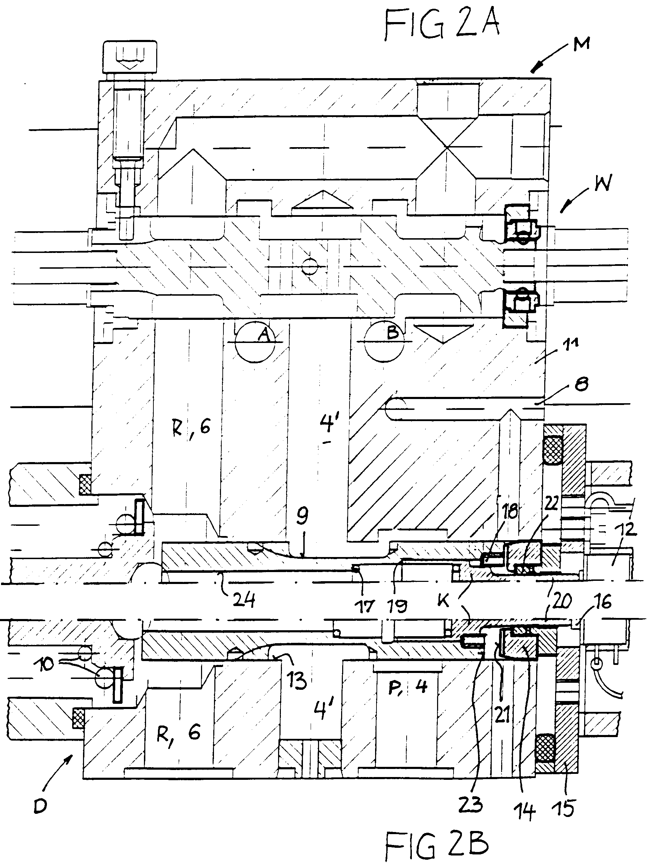

In dem Spannmodul M gemäß den Fig. 2 A,B sind das Wegesteuerventil W und das Druckminderventil D in einem gemeinsamen Gehäuse 11 untergebracht. Das Wegeventil W könnte aber auch vom Druckminderventil D getrennt sein. Im Wegesteuerventil W sind die Anschlüsse der Arbeitsleitungen A,B angedeutet, von denen jeweils einer entweder mit der Leitung 4' oder dem Rücklauf R bzw. der Rücklaufleitung 6 verbunden wird, abhängig davon, zu welcher Seite das Wegesteuerventil W verstellt wird.

In einer Bohrung 13 des Gehäuses 11 ist der Regelkolben 9 abgedichtet verschieblich geführt, der durch die Regelfeder 10 in Richtung auf einen Einsatz 14 belastet wird, der einen stationären Gegenanschlag 21 in der Bohrung 13 definiert. In Fig. 2A ist der Regelkolben 9 in seiner offenen Grundstellung gezeigt, in der er mit seinem Ende 23 am Gegenanschlag 21 abgefangen ist und die Pumpenleitung 4 vom Rücklauf R trennt. Im Regelkolben 9 ist ein Betätigungskolben K zwischen einer eingefahrenen Stellung (Fig.2A) und einer ausgefahrenen Stellung (Fig.2B) zwischen Begrenzungen 19 und 18 verschiebbar. Der Betätigungskolben K wird in Richtung auf die ausgefahrene Stellung durch eine erste Feder 17 beaufschlagt. Der Regelkolben 9 besitzt in diesem Ausführungsbeispiel eine zentrale Innenbohrung 24, die über den die Regelfeder 10 aufnehmenden Raum mit dem Rücklauf R bzw. der Rücklaufleitung 6 verbunden ist. Der Betätigungskolben K besitzt einen bei dieser Ausführungsform einstückig angeformten Stößel 20 kleineren Durchmessers, der den Einsatz 14 durchsetzt und sich durch eine Dichtung 22 bis zum Schalter 12 erstreckt und auf einen Betätiger 16 des Schalters 22 ausgerichtet ist.

Die Feder 17 ist so stark, daß sie den Bewegungswiderstand des Betätigungskolbens K und des Stößels 20 in der Dichtung 22 zu überwinden vermag und sich ein gewünschter Verstelldruck für den Betätigungskolben K ergibt. Der Schalter 12 ist an einer Platte 15 montiert.

Der Regelkolben 9 wird an seinem Ende 23 vom über die Steuerleitung 8 zugeführten Steuerdruck beaufschlagt. Der Steuerdruck beaufschlagt bei dieser Ausführungsform auch den Betätigungskolben K, so daß dieser in Abhängigkeit von der Höhe des Steuerdrucks entweder die ausgefahrene Stellung gemäß Fig. 2B oder die eingefahrene Stellung gemäß Fig. 2A einnimmt. Bei hoch eingestelltem Spanndruck wird der Betätigungskolben K an der Begrenzung 19 gehalten (eingefahrene Stellung). Bei niedrig eingestelltem Spanndruck wird der Betätigungskolben K hingegen an der Begrenzung 18 gehalten (ausgefahrene Stellung). Auf diese Weise wird der Schaltpunkt des Schalters 12 innerhalb des Regelkolbenhubes verschoben, d.h. der Punkt innerhalb des Regelkolbenhubs axial verlagert, an dem der Regelkolben 9 über den Betätigungskolben K den Druckschalter 12 betätigt. Bei hohem Spanndruck wird der Regelkolben 9 nur geringfügig aus der offenen Grundstellung gegen die Regelfeder 10 verschoben, während er bei niedrigem Spanndruck weiter aus der offenen Grundstellung gegen die Regelfeder 10 verschoben wird (Regelstellungen des Regelkolbens 9). Die Einstellung des Spanndrucks wird vorab durch eine Verstellung der Vorspannung der Regelfeder 10 vorgenommen. Der Betätigungskolben K ließe sich nicht nur zwischen den beiden Stellungen (an 18 oder an 19) verstellen, sondern gegebenenfalls stufenlos in Abhängigkeit von der Höhe des Steuerdrucks und der C-Rate der Feder 17.

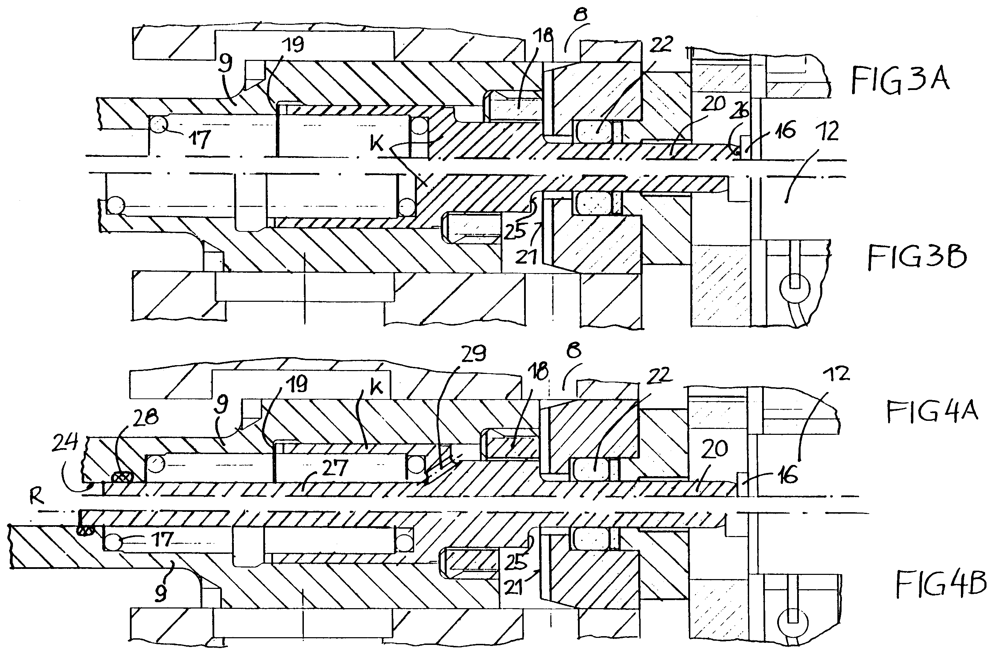

Bei der Ausführungsform der Fig. 3A,3B liegen im wesentlichen die gleichen Verhältnisse wie bei der Ausführungsform gemäß den Fig. 2A,2B vor. Unterschiedlich ist, daß der Betätigungskolben K zusätzlich mit einem Anschlag 25 versehen ist, der auf den stationären Gegenanschlag 21 ausgerichtet ist und an diesem abgefangen wird, ehe der Regelkolben 9 seine offene Grundstellung am Gegenanschlag 21 erreicht. Wie bei der Ausführungsform 2A,2B wird der Betätigungskolben K zur Verschiebung des Schaltpunktes hydraulisch, z.B. in zwei Stufen oder stufenlos, zwischen der eingefahrenen und der ausgefahrenen Stellung verstellt. Zusätzlich kommt der Anschlag 25 zur Wirkung, um den Schalter 12 bzw. dessen Betätiger 16 ab Erreichen seines Schaltpunktes vom Regelkolben 9 zu entkoppeln, da der Schalter 12 ab Erreichen seines Schaltpunktes einen kürzeren Nachlaufweg seines Betätigers 16 hat als der Resthubweg des Regelkolbens 9 dann noch bis zur offenen Grundstellung beträgt. Ferner wird durch das Abfangen des Betätigungskolbens K mit seinem Anschlag 25 am Gegenanschlag 21 der Betätiger 16 ab Erreichen des Schaltpunktes des Druckschalters 12 von gegebenenfalls schädlichen Kräften freigehalten. Von einem Nachlaufweg von ca. 0,8mm werden dann nur 0,6 mm benutzt.

In Fig. 3A ist der Regelkolben 9 mit eingefahrenem Betätigungskolben K in seiner offenen Grundstellung gezeigt; in Fig. 3B hingegen in einer Regelstellung für niedrigen Spanndruck, wobei sich der Betätigungskolben K in der ausgefahrenen Stellung befindet.

Die Ausführungsform der Fig. 4A,4B unterscheidet sich von den beiden vorhergehenden Ausführungsformen dadurch, daß der Betätigungskolben K nicht hydraulisch relativ zum Regelkolben 9 verstellbar ist, sondern durch das Zusammenwirken des Anschlags 25 mit dem stationären Gegenanschlag 21. Durch wenigstens eine Verbindungsbohrung 29 (und ggfs. einen zum Stößel 20 flächengleichen Fortsatz 27, der eine Dichtung 28 in der Innenbohrung 24 des Regelkolbens 9 durchsetzt), ist der Betätigungskolben K bezüglich des Steuerdrucks in der Leitung 8 druckausgeglichen. Er wird durch die erste Feder 17 in Richtung zur Begrenzung 18 (Fig.4B) beaufschlagt, wobei die Feder 17 nur so stark ist, daß sie den Bewegungswiderstand des Betätigungskolbens K in den Dichtungen 22,28 und zwischen den Begrenzungen 19,18 überwindet. Wird der Fortsatz 27 weggelassen, dann entfallen auch die Dichtung 28 und die Innenbohrung 24.

In Fig. 4A ist der Regelkolben 9 mit in die eingefahrene Stellung verschobenem Betätigungskolben K am Gegenanschlag 21 abgefangen. Durch die Zusammenarbeit zwischen dem Anschlag 25 und dem Gegenanschlag 21 wird der Betätigungskolben K in seiner eingefahrenen Stellung gehalten. Der Betätiger 16 des Schalters 12 hat den Schaltpunkt gerade überfahren. Der Schalter 12 meldet, z.B., "kein Spanndruck".

In Fig. 4B befindet sich der Regelkolben 9 beispielsweise in einer Regel-Betriebsstellung. Der Betätigungskolben K ist in seiner ausgefahrenen Stellung. Der Schaltpunkt des Schalters 12 ist nicht erreicht. Der Schalter 12 meldet "Spanndruck vorhanden". Bei einer Bewegung des Regelkolbens in Fig. 4B nach rechts wird der Betätigungskolben K dann nur soweit mitgenommen, bis der Betätiger 16 seinen Schaltpunkt überschreitet. Unmittelbar danach (ca. 0,6mm bei einem Nachlaufweg von 0,8mm) wird der Betätigungskolben K mittels des Anschlags 25 am Gegenanschlag 21 abgefangen, während sich der Regelkolben gegebenenfalls weiterbewegt bis in die in Fig. 4A gezeigte offene Grundstellung.

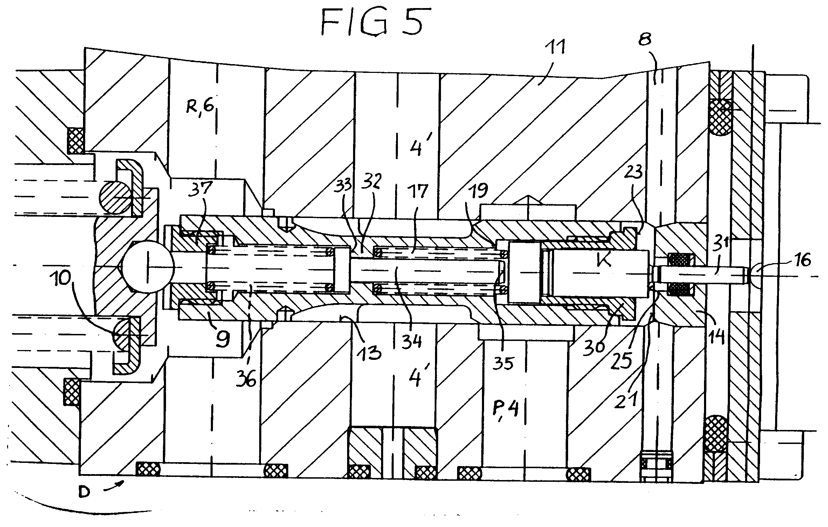

Bei der Ausführungsform der Fig. 5, die den Regelkolben 9 in einer Regelstellung und bei einer Druckschaltereinstellung bei niedrigem Steuerdruck zeigt, ist der Betätigungskolben K nicht nur zwischen der eingefahrenen und der ausgefahrenen Stellung (Begrenzungen 19 und 21) mittels des in der Steuerleitung 8 herrschenden Steuerdrucks verstellbar, sondern auch in wenigstens einer Zwischenstellung haltbar, die durch einen Zwischenanschlag 35 für den Betätigungskolben K definiert ist. In Fig. 5 ist der Betätigungskolben K in der ausgefahrenen Stellung gezeigt, wobei er bei einer Regelbewegung des Regelkolbens 9 nach rechts am stationären Anschlag 21 abgefangen und gegenüber dem Betätiger 16 des Druckschalters entkoppelt wird, um diesen nicht unzweckmäßig stark zu belasten. Der stationäre Anschlag 21 dient auch zum Abfangen des Regelkolbens 9 in dessen Bewegungsrichtung nach rechts, wobei dann der Anschlag 23 einer in den Regelkolben 9 eingeschraubten Hülse 30 am Anschlag 21 anliegt. wird. Der Betägigungskolben K ist mit einem Stößel 31 auf den Betätiger 16 ausgerichtet und wird im Regelkolben 9 durch die erste Feder 17 in Ausfahrrichtung und entgegen dem Steuerdruck in der Steuerleitung 8 beaufschlagt. Der Zwischenanschlag 35 wird von einem Ende eines Stößels 34 definiert, der im Regelkolben 9 axial verschiebbar ist und durch eine zweite Feder 36 belastet wird, die sich an einem Einsatz 37 abstützt und den Stößel 34 in Ausfahrrichtung des Betätigungskolbens K und gleichsinnig zur ersten Feder 17 belastet. Für den Stößel 34 ist ein Widerlager 33 an einer Schulter 32 des Regelkolbens 9 vorgesehen, an der sich auch die erste Feder 17 abstützt, die den Betätigungskolben K direkt beaufschlagt. Die Länge des Stößels 34 ist so gewählt, daß der am Widerlager 33 abgefangene Stößel 34 mit seinem Zwischenanschlag 35 in axialer Richtung geringfügig über den Anschlag bzw. die Begrenzung 19 übersteht. Der Stößel 34 durchsetzt die erste Feder 17, die am Betätigungskolben K direkt anliegt.

In der in Fig. 5 gezeigten, ausgefahrenen Stellung des Betätigungskolbens K wirkt nur die erste Feder 17.

Steigt der Steuerdruck in der Steuerleitung 8, dann wird der Betätigungskolben K in Richtung zur eingefahrenen Stellung bzw. zur Begrenzung 19 verschoben, bis er am Zwischenanschlag 35 anliegt. Die zweite Feder 36 ist (unter Berücksichtigung der gleichzeitig wirkenden ersten Feder 17) so ausgelegt, daß die Summe der Federkräfte einem bestimmten Druckwert entspricht. Je nachdem, ob sich der Regelkolben 9 nach rechts oder nach links bewegt, wird der Betätiger 16 gedrückt oder entlastet.

Erst wenn der Steuerdruck in der Steuerdruckleitung 8 weiter ansteigt, wird auch die Kraft der zweiten Feder 36 überwunden, so daß der Betätigungskolben K die eingefahrene Stellung an der Begrenzung 19 erreicht.

Die Folge ist, daß der Schaltpunkt des Betätigers 16 bei diesem Ausführungsbeispiel drei unterschiedlichen Regelkolbenstellungen entspricht. Es wäre durchaus denkbar, in analoger Weise mehr als drei Schaltpunktstellungen vorzusehen.

Die zweite Feder 36 wird zur Verstellung des Drucks, bei dem die Zwischenstellung gehalten wird, entweder gegen eine andere ausgetauscht oder in ihrer Vorspannung verstellt.

Bei einem Gesamthub des Regelkolbens 9 von ca. 2,0 mm kann in Fig. 5 der Betätigungskolben K einen Gesamthub von ca. 1,2 mm ausführen, wobei der Hubweg von der ausgefahrenen Stellung bis zur Zwischenstellung ca. 0,4 mm und der Hubweg von der Zwischenstellung bis in die eingefahrene Stellung ca. 0,8 mm betragen kann.

Der Betätigungskolben K könnte auch seitlich neben dem Regelkolben 9 angeordnet sein und über eine federnde Verbindung (Feder 17) mit dem Regelkolben 9 gekoppelt werden. Bei einer hydraulischen Verstellung des Betätigungskolbens K müßte dieser dann durch den Steuerdruck in der Steuerdruckleitung 8 beaufschlagbar sein. Bei einer nur mechanischen Betätigung müßte der Gegenanschlag 21 entsprechend ausgebildet werden. Der Stößel 20 könnte vom Betätigungskolben K getrennt sein, sofern sichergestellt ist, daß er durch eine Rückstellfeder zurückgestellt wird.

## Patentansprüche

1. Hydraulisches Spannmodul (M) zum Ansteuern einer Werkzeugmaschinen-Spannvorrichtung (S), mit einem an eine Druckquelle (P) angeschlossenen, einen Regelkolben (9) enthaltenden Druckminderventil (D) zum Einstellen des Spanndrucks, mit einem stromab des Druckminderventils (D) angeordneten Wegeventil (W), und mit einem vom Regelkolben (9) hubabhängig betätigbaren elektromechanischen Schalter (12) zum Überwachen des Spanndrucks, **dadurch gekennzeichnet,** daß zum Betätigen des Schalters (12) zwischen dem Regelkolben (9) und dem Schalter (12) ein vom Regelkolben (9) verschiebbarer Betätigungskolben (K) vorgesehen ist, der zusätzlich achsparallel relativ zum Regelkolben (9) verschiebbar ist, und daß der Betätigungskolben (K) gegensinnig zur Hubbewegung des Regelkolbens (9) zu dessen Grundstellung verstellbar ist.

2. Hydraulisches Spannmodul nach Anspruch 1, **dadurch gekennzeichnet,** daß der Betätigungskolben (K) im Regelkolben (9) zwischen einer eingefahrenen und einer ausgefahrenen Stellung verschiebbar geführt ist und durch eine erste Feder (17) in Richtung auf die ausgefahrene Stellung beaufschlagt wird.

3. Hydraulisches Spannmodul nach Anspruch 2, **dadurch gekennzeichnet,** daß der Betätigungskolben (K) auf der Federseite druckentlastet ist und durch einen den Regelkolben (9) gegen eine Regelfeder (10) beaufschlagenden Steuerdruck in Abhängigkeit von der Höhe des Steuerdrucks aus der ausgefahrenen Stellung zumindest in Richtung zur eingefahrenen Stellung, und gegensinnig zur Hubbewegung des Regelkolbens (9) zu dessen Grundstellung hydraulisch verstellbar ist.

4. Hydraulisches Spannmodul nach wenigstens einem der Ansprüche 1 bis 3, **dadurch gekennzeichnet,** daß der Betätigungskolben (K) einen Anschlag (25) aufweist, der auf einen stationären Gegenanschlag (21) ausgerichtet ist, und daß der Betätigungskolben (K) bei der Hubbewegung des Regelkolbens (9) in Richtung zur offenen Grundstellung mittels des Gegenanschlags (21) aus der ausgefahrenen Stellung zumindest in Richtung zur eingefahrenen Stellung verstellbar ist.

5. Hydraulisches Spannmodul nach den Ansprüchen 1 und 2, **dadurch gekennzeichnet,** daß der Betätigungskolben (K) einen Anschlag (25) aufweist, der auf einen vom Regelkolben (9) getrennten, stationären Gegenanschlag (21) ausgerichtet ist, daß der Betätigungskolben (9) mittels des Gegenanschlags (21) bei der Hubbewegung des Regelkolbens (9) in Richtung zur offenen Grundstellung aus der ausgefahrenen Stellung zumindest in Richtung zur eingefahrenen Stellung verstellbar ist, und daß der Betätigungskolben (K) bezüglich eines den Regelkolben (9)gegen eine Regelfeder (10) beaufschlagenden Steuerdrucks druckausgeglichen ist.

6. Hydraulisches Spannmodul nach den Ansprüchen 1 bis 3 und 5, **dadurch gekennzeichnet,** daß der Betätigungskolben (K), insbesondere in Regelstellungen des Regelkolbens (9) relativ zum Regelkolben (9) zwischen der eingefahrenen und der ausgefahrenen Stellung in mindestens einer Zwischenstellung an einem Zwischenanschlag (35) festlegbar ist.

7. Hydraulisches Spannmodul nach Anspruch 6, **dadurch gekennzeichnet,** daß der Zwischenanschlag (35) in Richtung zur eingefahrenen Stellung des Betätigungskolbens (K) gegen wenigstens eine zweite Feder (36) nachgiebig angeordnet ist, und daß der Betätigungskolben (K) entgegengesetzt zur zweiten Feder (36) durch den Steuerdruck beaufschlagt ist.

8. Hydraulisches Spannmodul nach den Ansprüchen 6 und 7, **dadurch gekennzeichnet,** daß der Betätigungskolben (K) durch die erste Feder (17) direkt in Ausfahrrichtung aus dem Regelkolben (9) beaufschlagt ist, daß der Zwischenanschlag (35) durch die zweite, von der ersten Feder (17) getrennte, gleichsinnige Feder (36) beaufschlagt ist, und daß der Zwischenanschlag (35) durch die zweite Feder (36) an einem die Zwischenstellung des Betätigungskolbens (K) definierenden Gegenlager (33) im Regelkolben (9) haltbar ist.

9. Hydraulisches Spannmodul nach Anspruch 8, **dadurch gekennzeichnet,** daß der Zwischenanschlag (35) von einem im Regelkolben (9) axial verschiebbaren Stößel gebildet ist, der die erste Feder (17) durchsetzt, und daß das Gegenlager (33) für den Stößel (34) eine Schulter (32) im Regelkolben (9) ist, an der sich, vorzugsweise, die erste Feder (17) abstützt.

10. Hydraulisches Spannmodul nach wenigstens einem der Ansprüche 4 bis 9, **dadurch gekennzeichnet,** daß der Gegenanschlag (21) auf das Regelkolbenende (23) ausgerichtet ist und die offene Grundstellung des Regelkolbens (9) bestimmt.

11. Hydraulisches Spannmodul nach den Ansprüchen 5 oder 6, **dadurch gekennzeichnet,** daß der Schalter (12) ab seinem Schaltpunkt einen kürzeren Nachlaufweg besitzt als der ab dem Schaltpunkt des Schalters (12) für den Regelkolben (9) vorgesehene Resthub bis in die offene Grundstellung, und daß der Anschlag (25) des Betätigungskolbens (K) am Gegenanschlag (21) nach dem Überfahren des Schaltpunkts des Schalters (12) innerhalb des Nachlaufwegs des Schalters (12) abfangbar ist.

12. Hydraulisches Spannmodul nach wenigstens einem der Ansprüche 1 bis 11, **dadurch gekennzeichnet,** daß der Hub des Betätigungskolbens (K) zwischen der ausgefahrenen und der eingefahrenen Stellung kleiner ist als der Gesamthub des Regelkolbens (9).

13. Hydraulisches Spannmodul nach wenigstens einem der Ansprüche 1 bis 12, **dadurch gekennzeichnet,** daß der Gesamthub des Regelkolbens (9) ca. 2,5 mm, der begrenzte Hub des Betätigungskolbens (K) relativ zum Regelkolben (9) ca. 1,5 mm und der Nachlaufweg des Schalters (12) ab dem Schaltpunkt ca. 0,8mm beträgt, wobei vom Nachlaufweg nur ein Bruchteil, z.B. 75%, genutzt wird.

14. Hydraulisches Spannmodul nach Anspruch 6, **dadurch gekennzeichnet,** daß der Gesamthub des Regelkolbens (9) ca. 2,0 mm, der Gesamthub des Bestätigungskolbens (K) relativ zum Regelkolben (9) ca. 1,2 mm, der erste Hub des Betätigungskolbens (K) bis in die Zwischenstellung ca. 0,4 mm und der Resthub ab der Zwischenstellung ca. 0,8 mm betragen.

## Claims

1. Hydraulic clamping module (M) for controlling a machine-tool clamping fixture (S), having a pressure-reducing valve (D), which is connected to a pressure source (P) and contains a control piston (9), for setting the clamping pressure, having a directional control valve (W), which is arranged downstream of the pressure-reducing valve (D), and having an electromechanical switch (12), which can be actuated as a function of the travel of the control piston (9), for monitoring the clamping pressure, characterized in that, to actuate the switch (12), an actuating piston (K), which can be displaced by the control piston (9) and in addition can be displaced in an axially parallel direction relative to the control piston (9), is provided between the control piston (9) and the switch (12), and in that the actuating piston (K) can be adjusted in the opposite direction to the travel movement of the control piston (9) towards its normal position.

2. Hydraulic clamping module according to Claim 1, characterized in that the actuating piston (K) is guided in the control piston (9) in such a manner that it can be displaced between a retracted position and an extended position, and is pressed by a first spring (17) towards the extended position.

3. Hydraulic clamping module according to Claim 2, characterized in that the pressure on the actuating piston (K) is relieved on the spring side, and the actuating piston can be hydraulically adjusted, by means of a control pressure which presses the control piston (9) against a control spring (10), out of the extended position at least towards the retracted position as a function of the level of the control pressure, and in the opposite direction to the travel movement of the control piston (9) towards its normal position.

4. Hydraulic clamping module according to at least one of Claims 1 to 3, characterized in that the actuating piston (K) has a stop (25) which is directed at a stationary mating stop (21), and in that the actuating piston (K), during the travel movement of the control piston (9) towards the open normal position, can be adjusted, by means of the mating stop (21), out of the extended position at least towards the retracted position.

5. Hydraulic clamping module according to Claims 1 and 2, characterized in that the actuating piston (K) has a stop (25) which is directed at a stationary mating stop (21) which is separate from the control piston (9), in that the actuating piston (9) can be adjusted, by means of the mating stop (21), during the travel movement of the control piston (9) towards the open normal position, out of the extended position at least towards the retracted position, and in that the actuating piston (K) is pressure-compensated with regard to a control pressure which presses the control piston (9) onto a control spring (10).

6. Hydraulic clamping module according to Claims 1 to 3 and 5, characterized in that the actuating piston (K), in particular in control positions of the control piston (9), can be fixed relative to the control piston (9) between the retracted position and the extended position, in at least one intermediate position, on an intermediate stop (35).

7. Hydraulic clamping module according to Claim 6, characterized in that the intermediate stop (35), in the direction towards the retracted position of the actuating piston (K), is arranged so that it can yield against at least a second spring (36), and in that the actuating piston (K) is pressed in the opposite direction to the second spring (36) by the control pressure.

8. Hydraulic clamping module according to Claims 6 and 7, characterized in that the actuating piston (K) is pressed out of the control piston (9) directly in the direction of extension by the first spring (17), in that the intermediate stop (35) is subjected to pressure by the second spring (36), which is separate from the first spring (17) and acts in the same direction, and in that the intermediate stop (35) can be held against a mating bearing (33), which defines the intermediate position of the actuating piston (K), in the control piston (9) by means of the second spring (36).

9. Hydraulic clamping module according to Claim 8, characterized in that the intermediate stop (35) is formed by a plunger which can be displaced axially in the control piston (9) and passes through the first spring (17), and in that the mating bearing (33) for the plunger (34) is a shoulder (32) in the control piston (9), against which shoulder the first spring (17) is preferably supported.

10. Hydraulic clamping module according to at least one of Claims 4 to 9, characterized in that the mating stop (21) is directed towards the control-piston end (23) and determines the open normal position of the control piston (9).

11. Hydraulic clamping module according to Claims 5 or 6, characterized in that the switch (12), from its switching point, has a shorter run-out distance than the remaining travel provided for the control piston (9) from the switching point of the switch (12) before it reaches the open normal position, and in that the stop (25) of the actuating piston (K) can be trapped against the mating stop (21) after it has moved over the switching point of the switch (12), within the run-out distance of the switch (12).

12. Hydraulic clamping module according to at least one of Claims 1 to 11, characterized in that the travel of the actuating piston (K) between the extended position and the retracted position is shorter than the total travel of the control piston (9).

13. Hydraulic clamping module according to at least one of Claims 1 to 12, characterized in that the total travel of the control piston (9) is approx. 2.5 mm, the limited travel of the actuating piston (K) relative to the control piston (9) is approx. 1.5 mm and the run-out distance of the switch (12) after the switching point is approx. 0.8 mm, only a fraction, e.g. 75%, of the run-out distance being used.

14. Hydraulic clamping module according to Claim 6, characterized in that the total travel of the control piston (9) is approx. 2.0 mm, the total travel of the actuating piston (K) relative to the control piston (9) is approx. 1.2 mm, the first travel of the actuating piston (K) until it reaches the intermediate position is approx. 0.4 mm and the remaining travel beyond the intermediate position is approx. 0.8 mm.

## Revendications

1. Module de serrage hydraulique (M) pour commander un dispositif de serrage de machine-outil (S), avec une soupape de détente (D) comportant un piston de réglage (9) et étant raccordée à une source de pression (P) pour régler la pression de serrage, avec une soupape de distribution (W) disposée en aval de la soupape de détente (D), et avec un commutateur électromécanique (12) pouvant être actionné en fonction de la course par le piston de réglage (9) pour contrôler la pression de serrage, **caractérisé en ce que**, pour actionner le commutateur (12), il est prévu entre le piston de réglage (9) et le commutateur (12) un piston d'actionnement (K) pouvant être déplacé par le piston de réglage (9), lequel piston d'actionnement peut en plus être déplacé relativement au piston de réglage (9) parallèlement à l'axe, et en ce que le piston d'actionnement (K) peut être déplacé vers sa position de départ dans le sens inverse du mouvement de course du piston de réglage (9).

2. Module de serrage hydraulique selon la revendication 1, **caractérisé en ce que** le piston d'actionnement (K) est guidé dans le piston de réglage (9) de manière à pouvoir être déplacé entre une position rentrée et une position sortie et est frappé par un premier ressort (17) en direction de la position sortie.

3. Module de serrage hydraulique selon la revendication 2, **caractérisé en ce que** le piston d'actionnement (K) est détendu du côté du ressort et peut être déplacé hydrauliquement vers sa position de départ, de la position sortie au moins en direction de la position rentrée, et dans le sens inverse du mouvement de course du piston de réglage (9), par une pression de commande frappant le piston de réglage (9) à l'encontre d'un ressort de réglage (10) en fonction de la hauteur de la pression de réglage.

4. Module de serrage hydraulique selon au moins l'une des revendications 1 à 3, **caractérisé en ce que** le piston d'actionnement (K) présente une butée (25), qui est alignée sur une contre-butée fixe (21), et en ce que le piston d'actionnement (K) peut être déplacé, lors du mouvement de course du piston de réglage (9) en direction de la position de départ ouverte, de la position sortie au moins en direction de la position rentrée au moyen de la contre-butée (21).

5. Module de serrage hydraulique selon les revendications 1 et 2, **caractérisé en ce que** le piston d'actionnement (K) présente une butée (25), qui est alignée sur une contre-butée fixe (21) séparée du piston de réglage (9), en ce que le piston d'actionnement (K) peut être déplacé au moyen de la contre-butée (21), lors du mouvement de course du piston de réglage (9) en direction de la position de départ ouverte, de la position sortie au moins en direction de la position rentrée, et en ce que le piston d'actionnement (K) est équilibré en pression en ce qui concerne une pression de commande frappant le piston de réglage (9) à l'encontre d'un ressort de réglage (10).

6. Module de serrage hydraulique selon les revendications 1 à 3 et 5, **caractérisé en ce que** le piston d'actionnement (K), en particulier dans les positions de réglage du piston de réglage (9), peut être fixé contre une butée intermédiaire (35) relativement au piston de réglage (9), entre la position rentrée et la position sortie, dans au moins une position intermédiaire.

7. Module de serrage hydraulique selon la revendication 6, **caractérise en ce que** la butée intermédiaire (35) est disposée de manière élastique en direction de la position rentrée du piston d'actionnement (K) contre au moyen un second ressort (36), et en ce que le piston d'actionnement (K) est frappé par la pression de commande à l'encontre du second ressort (36).

8. Module de serrage hydraulique selon les revendications 6 et 7, **caractérisé en ce que** le piston d'actionnement (K) est frappé par le premier ressort (17) directement dans la direction de sortie hors du piston de réglage (9), en ce que la butée intermédiaire (35) est frappée par le second ressort (36) de même sens et séparé du premier ressort (17), et en ce que la butée intermédiaire (35) peut être arrêtée dans le piston de réglage (9) par le second ressort (36) contre une contre-butée (33) définissant la position intermédiaire du piston d'actionnement (K).

9. Module de serrage hydraulique selon la revendication 8, **caractérisé en ce que** la butée intermédiaire (35) est formée par un coulisseau axialement mobile dans le piston de réglage (9), lequel coulisseau traverse le premier ressort (17), et en ce que la contre-butée (33) est un épaulement (32) pour le coulisseau (34) dans le piston de réglage (9), contre lequel épaulement s'appuie, de préférence, le premier ressort (17).

10. Module de serrage hydraulique selon au moins l'une des revendications 4 à 9, **caractérisé en ce que** la contre-butée (21) est alignée sur l'extrémité de piston de réglage (23) et détermine la position de départ ouverte du piston de réglage (9).

11. Module de serrage hydraulique selon les revendications 5 ou 6, **caractérise en ce que** le commutateur (12) possède une distance de ralentissement à partir de son point de commutation plus courte que la course restante prévue pour le piston de réglage (9) jusqu'à la position de départ ouverte à partir du point de commutation du commutateur (12), et en ce que la butée (25) du piston d'actionnement (K) peut être arrêtée contre la contre-butée (21) après dépassement du point de commutation du commutateur (12) à l'intérieur de la distance de ralentissement du commutateur (12).

12. Module de serrage hydraulique selon au moins l'une des revendications 1 à 11, **caractérisé en ce que** la course du piston d'actionnement (K) entre les positions sortie et rentrée est inférieure à la course totale du piston de réglage (9).

13. Module de serrage hydraulique selon au moins l'une des revendications 1 à 12, **caractérisé en ce que** la course totale du piston de réglage (9) est égale à environ 2,5 mm, la course limitée du piston d'actionnement (K) relativement au piston de réglage (9) à environ 1,5 mm et la distance de ralentissement du commutateur (12) à partir du point de commutation à environ 0,8 mm, seule une fraction de la distance de ralentissement, par ex. 75 %, étant utilisée.

14. Module de serrage hydraulique selon la revendication 6, **caractérisé en ce que** la course totale du piston de réglage (9) est égale à environ 2,0 mm, la course totale du piston d'actionnement (K) relativement au piston de réglage (9) à environ 1,2 mm, la première course du piston d'actionnement (K) jusqu'à la position intermédiaire à environ 0,4 mm et la course restante à partir de la position intermédiaire à environ 0,8 mm.
